# EUROPEAN PATENT APPLICATION

(11) **EP 4 641 504 A1**
(43) Date of publication of application: **29.10.2025**
(21) Application number: 24172061.4
(22) Date of filing: 24.04.2024
(51) Int. Cl.: G06T 11/00, G06V 10/82, G06V 20/20

(54) **METHOD FOR ANONYMIZING FEATURES IN AN IMAGE**

(71) Applicant: AUMOVIO Autonomous Mobility Germany GmbH, 85057 Ingolstadt (DE)
(72) Inventor: Aleksziev, Rita Antonia, 1092 Budapest (HU); Mati, Peter, 1092 Budapest (HU); Deak-Meszlenyi, Regina, 1092 Budapest (HU)
(74) Representative: Aumovio Corporation

(57) **Abstract**

The present invention is concerned with a method, in particular a computer-implemented method, for anonymizing features (F) in an image, the method comprising the steps of:
- receiving at least one image (I(F)) comprising at least one feature (F);
- identifying the at least one feature (F) and detecting feature boundaries of the at least one feature (F); and
- replacing the at least one feature (F) by a replacement feature (RF) generated by using a generative image generation model (IGM), and
- outputting an anonymized image (IA) comprising the replacement feature (RF).

The invention is also concerned with a preferred use of the method for training a machine learning model, a computer program, and a computer-readable (storage) medium.

## Description

The present invention is concerned with a method for anonymizing objects in an image. The method may preferably be used for preparing training data used for training of various machine learning models. The present invention is as well concerned with a computer program embodied to carry out the method according to the present invention and with a computer-readable (storage) medium on which the computer program is stored.

Anonymization of image data, for instance, data used to train machine learning models, may be mandatory to fulfill varying national requirements relating to personal data. Features to be anonymized are for instance facial elements of persons in images, environmental objects such as identifiable structures, buildings or areas with restricted public access, in particular military facilities, or license plates on objects.

Overall, anonymization of data can pose substantial challenges for organizations because possessing datasets may originate from different regions governed by varying regulations mandating such anonymization. Data originating from jurisdictions with such regulations may only be employed without censoring within the country. In cases where data is intended for global use, rigorous anonymization processes are required to create a censored data that adheres to privacy and regulatory standards.

Features to be anonymized are for instance facial elements of persons in images, environmental objects such as identifiable structures, buildings or areas with restricted public access, in particular military facilities, or license plates on objects.

At present, such anonym ization is frequently carried out by performing an obscuration method, for instance by applying a pixelization or blurring to certain parts of an image containing the feature to be anonymized. However, further processing of data, for which anonymization has been carried out by performing an obscuration method yields in a reduced accuracy. If such data is used for training of a machine learning model the network performance may be significantly lower as compared to a model trained with data to which no obscuration method was applied.

Another approach for image data anonymization is to substitute the image parts containing the features to be anonymized by a substitute image part which may e. g. be synthetically produced. One example is described in "DeepPrivacy2: Towards Realistic Full-Body Anonymization" by H. Hukkelas et al., arXiv2211.09454. However, such methods are applicable to facial elements only.

Based on the existing approaches and their disadvantages, it is an object of the present invention to provide an efficient process for image data anonymization.

This object is achieved by the method according to claim 1, by its preferred use according to claim 13, by the computer program according to claim 14 and the computer-readable (storage) medium according to claim 15.

With respect to the method, the object underlying the present invention is achieved by a method, in particular a computer-implemented method, for anonymizing features in an image, the method comprising the steps of:
- receiving input data in the form of at least one image comprising at least one feature to be anonymized;
- identifying the at least one feature and detecting feature boundaries of the at least one feature; and
- replacing the at least one feature by a replacement feature generated by using a generative image generation model, and
- outputting an anonymized image comprising the replacement feature.

The at least one feature or object in the image is preferably a facial element of a person in the image, an object such as an identifiable structure, building or area with restricted public access, in particular a military facility or the like, or it is a license plate on an object. Other examples are possible as well. What needs to be anonymized depends on the jurisdiction in which the image is captured and its national regulations.

The method according to the present invention preferably allows to anonymize various different features and is not restricted to a certain type of image feature, e. g. to facial features. That way, the invention provides a universal method to anonymize image data in line with varying regulations in different countries.

The basic idea consists in replacing features to be anonymized by replacement features that are synthetically and individually created with high accuracy for each feature in each image. Data anonymized by the method of the present invention therefore maintains its usability for further processing, in particular for training of a machine learning model based on the anonymized data without any performance loss due to the anonymization process.

In a preferred embodiment, identifying the at least one feature and detecting feature boundaries of the at least one feature comprises using an instance segmentation model.

In another preferred embodiment, identifying the at least one feature and detecting feature boundaries of the at least one feature comprises using an object detection model.

It might also be of advantage if an object detection model and an instance segmentation model are used together. For instance, in a first step the object detection model may be used to detect the feature within the image data. In a second step, the instance segmentation model may be used to determine its exact location and expansion within the image.

It is preferred, if the feature detection model and/or the instance segmentation model comprise(s) a convolutional neural network or a transformer network. The convolutional neural network may preferably be the U-Net or a YOLO network, especially YOLOv8 or YOLOv9. The U-Net was introduced by O. Ronneberger et al. in "U-Net: Convolutional Networks for Biomedical Image Segmentation" available on arXiv:1505.04597. The YOLO object detector in was suggested by J. Redmon et al. in "You Only Look Once: Unified, Real-Time Object Detection", available on arXiv:1506.02640. The transformer network in turn may be the Mask DINO network, which was introduced by F. Li et al. In "Mask DINO: Towards a Unified Tranformer-based Framework for Object Detection and Segmentation", avaiable on arXiv:26206.02777.

It is as well preferred, if the instance segmentation model is a segment anything model (SAM) as e. g. described in "Segment Anything" by A. Kirillov et al., available on arXiv:2304.02643.

Finally, it is preferred, if the feature detection model is a zero-shot object detector, especially a Grounding DINO model, as described in "Grounding DINO: Marrying DINO with Grounded Pre-Training for Open-Set Object Detection" by S. Liu et al., available on arXiv:2303.05499. Zero-shot object detectors aim to detect object classes which have not been observed during the training process.

In another preferred embodiment, the image generation model is a latent variable generative model, preferably a score-based generative model or a stable diffusion model. For instance, a diffusion model as e. g. described in "High-Resolution Image Synthesis with Latent Diffusion Models" by R. Rombach et al., arXiv:2112.10752, or in "Flow Matching For Generative Modeling" by Y. Lipman et al., arXiv:2210.02747 may be utilized.

Typically, generative models are embodied to learn a distribution of a training data set through a diffusion process. For instance, such process may start with adding Gaussian noise to the images of the data set in a given number of steps until it reaches a normal distribution, i.e. a complete noise. Afterwards, a parametric distribution (e. g. a Gaussian distribution) is fitted to the images with added noise at each time-step so as to learn the noise and to subtract it from the noised image to get a less noisy image. Eventually, the process arrives at the unnoised image. That way, it becomes possoble to approximate the original training data set distribution p by a distribution q.

A latent diffusion model works in a similar way but the noising-denoising process is performed based on a latent representation of the training data set, i.e. on a lower layer feature map.

Preferably, the image generation model is a text-to-image model, whereas a prompt is needed to generate an image used to replace a feature. The prompt is chosen to be descriptive for the feature to be replaced. The prompt may be created based on the identified feature.

It is of advantage, if the image comprising the at least one feature is an environmental image captured by an environmental sensor, especially a camera. The camera may preferably be a vehicle camera, or any other environmental camera, capable of capturing image data, especially for training a machine learning model such as a detection model.

It is also of advantage, if the at least one feature is a face of a person or a facial element of a person, a license plate on an object, or an object, in particular an identifiable structure, a building or an area to be anonymized or if the at least one feature is an obscured, in particular blurred or pixelated, image portion. That way, the method according to the present invention may not only be used to anonymize image data but also to improve the quality of already anonymized data, e. g. data anonymized by performing an obscuration method. Already existing data can therefore be improved for subsequent training of a machine learning model.

In a preferred embodiment, at least one of the feature detection model, the instance segmentation model, and the image generation model is/are tuned by applying a reinforcement learning procedure. Such procedure may e. g. be applied in accordance with the approach suggested by P. Christiano et al. in "Deep reinforcement learning from human preferences", available on arXiv:1706.03741.

In this regard, it is of advantage, if a reward function used for the reinforcement learning procedure is defined based on a performance of a function implemented by using a machine learning model, which is trained using multiple replacement images. The function implemented by using a machine learning model may e. g. be an object detection function, or a function contained in an advanced driver assistance system (ADAS). So called ADAS-functions are e. g.

It is further of advantage, if the machine learning model is an object detector or a semantic segmentation model.

The problem underlying the present invention is further solved by a use of the method according to one or more embodiments described for training of a function implemented by using a machine learning model, in particular for training of a machine learning model used to implement an ADAS function. The problem is also solved by a use of the replacement images produced by the method of the present invention according to any of the embodiments described for training a machine learning model, in particular for training of a machina learning model used to implement an ADAS function.

Advanced driver assistance systems (ADAS) for vehicles are based on a processing of various data sensed by various ADAS sensors, such as radar-, LiDAR- and ultrasonic sensors as well as cameras. By means of the ADAS sensors information relating to an environment of the vehicle can be obtained which in turn is used to realize various ADAS functions. ADAS functions on the one hand may include an assistance for the driver while control of the vehicle remains with the driver. On the other hand, depending on the level of automation, a full autonomously driving vehicle may be realized. Known ADAS functions for instance are various methods for detecting and/or classifying objects and/or obstacles in the vicinity of the vehicle, methods for lane detection and/or lane departure, methods for rain detection or also various parking assistance functions, e. g. support to search for a parking slot or to assist with a parking process, but also for autonomously performing the parking process.

The problem is as well solved by a method for training a machine learning model used to implement a function, especially an ADAS-function by using multiple replacement images obtained by the method of the present invention as training data.

The problem is further solved by a computer program (product) comprising instructions, which, when the program is executed by a computer, cause the computer to carry out the method according to the present invention and by a computer-readable (storage) medium comprising instructions executable by at least one processor to perform the method of the present invention or on which the computer program of the present invention is stored.

The invention and its preferred embodiments will be further described based on the subsequent figures, wherein
Fig. 1 shows a block diagram to illustrate the anonymization method of the present invention;
Fig. 2 illustrates the generation of a replacement image for the case of anonymizing a facial element of a person in an image;
Fig. 3 illustrates an embodiment in which the anonymization method is applied to an image containing a pixelated house; and
Fig. 4 illustrates the anonymization of a building in an image.

In the figures the same reference symbols are used for the same elements.

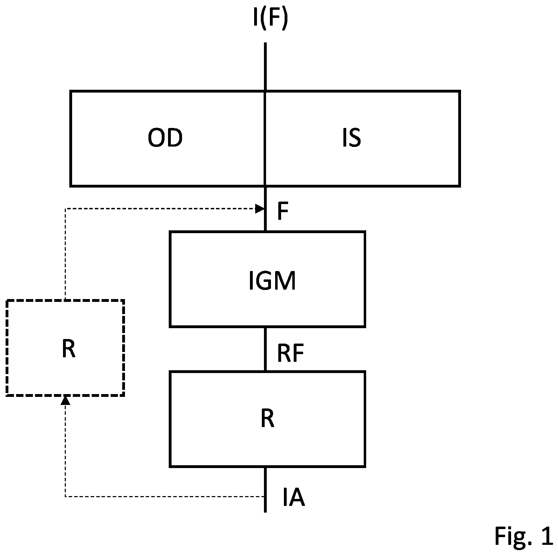

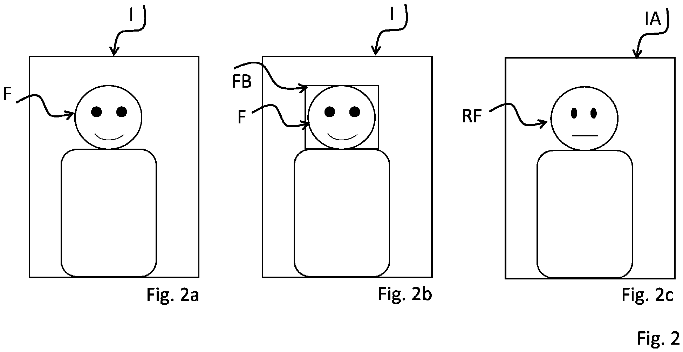

In Fig. 1 a block diagram illustrating the anonymization method according to the present invention. A received image I in which at least one feature F is shown, is provided to an object detecting model OD and/or an instance segmentation model SM in order to detect feature boundaries FB (illustrated in Fig. 2b) of the feature F. If both types of models are used, the image I(F) is preferably first provided to the object detection model OD and subsequently to the image segmentation module IS.

Subsequently, a replacement feature F is generated using a generative image generation model IGM and the feature F is replaced R by the replacement feature RF and finally, an anonymized image IA comprising the replacement feature RF is outputted.

Optionally, as indicated by the dotted lines, the image generation model IGM may be tuned by applying a reinforcement learning procedure R. In different embodiments, instead or in addition, also the feature detection model and/or the instance segmentation models may be tuned by a reinforcement learning procedure. A reward function r used for the reinforcement learning procedure R may further be defined based on a performance of a function implemented by using a machine learning model, which is trained using multiple replacement images IA. Such function f may, for instance, be any ADAS function. In such case, a performance of the ADAS function is used to define the reward function r.

The image I(F) containing the at least one feature F to be anonymized may e. g. be an environmental image recorded by using a camera. Exemplary features F in image data that typically need to be anonymized are shown in Figs. 2-4.

Fig. 2 refers to the case of anonymizing an image containing a facial element as the feature to be anonymized, here a face of a person in the image I, as illustrated in Fig. 2a. Fig. 2b shows the same image I for which the feature boundaries FB have been determined or identified by using an feature detection model OD or an instance segmentation model IS. The feature F is subsequently replaced by a replacement feature RF generated using an image generation model IGM, resulting in the anonymized image IA shown in Fig. 2c. That way, the person shown in the original image I has successfully been anonymized by replacing all facial elements referring to the person.

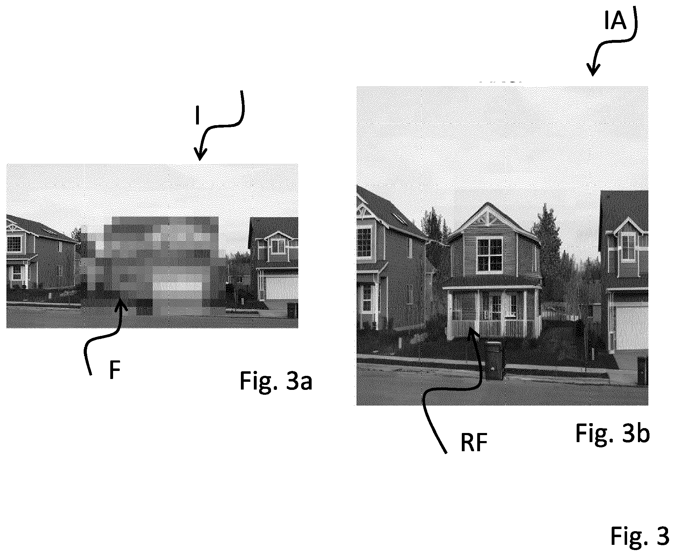

The anonymization method of the present invention may also be applied to images I that have already been anonymized by using conventional approaches, as illustrated in Fig. 3. The image I shown in Fig. 3a shows a feature F to be anonymized in the form of house which was obscured by pixelating the house. Using such images I for training of machine learning models can highly limit or lower the performance of the machine learning model, e. g. an object detection or semantic segmentation model. In order to successfully use or reuse the image data for which an obscuration procedure has already been carried out, the obscured image portion within the image is identified by using the feature detector OD and/or instance segmentation model IS and subsequently replaced by a replacement feature RF as illustrated in Fig. 3b which shows the corresponding anonymized image IA.

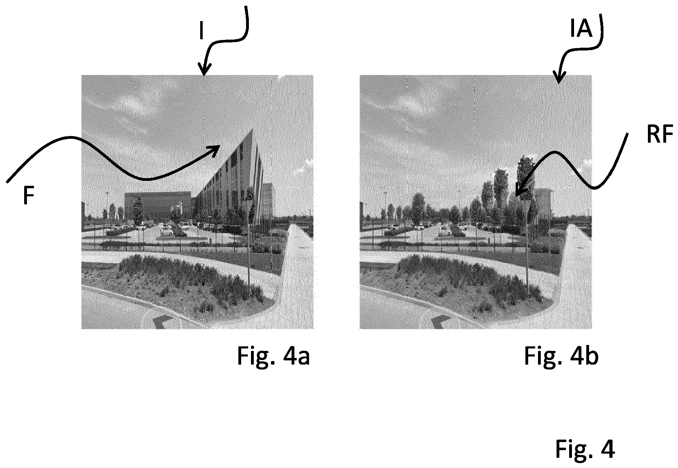

Another exemplary embodiment in which the feature F to be anonymized is a building, is shown in Fig. 4. Again, Fig. 4a refers to the initial image I and Fig. 4b refers to the anonymized image IA. In this case, the replacement feature RF was chosen as some environmental region without the building to be anonymized.

## Claims

1. Method, in particular a computer-implemented method, for anonymizing features (F) in an image, the method comprising the steps of:
- receiving at least one image (I(F)) comprising at least one feature (F);
- identifying the at least one feature (F) and detecting feature boundaries of the at least one feature (F); and
- replacing the at least one feature (F) by a replacement feature (RF) generated by using a generative image generation model (IGM), and
- outputting an anonymized image (IA) comprising the replacement feature (RF).

2. Method according to claim 1,
wherein identifying the at least one feature (F) and detecting feature boundaries of the at least one feature (F) comprises using an instance segmentation model (IS).

3. Method according to claim 1 or 2,
wherein identifying the at least one feature (F) and detecting feature boundaries of the at least one feature (F) comprises using an object detection model.

4. Method according to claim 2 or 3,
wherein the feature detection model (OD) and/or the instance segmentation model (IS) comprises a convolutional neural network or a transformer network.

5. Method according to claims 2 or 4,
wherein the instance segmentation model (IS) is a segment anything model.

6. Method according to claims 3 or 4,
wherein the feature detection model (OD) is a zero-shot object detector, especially a Grounding DINO model.

7. Method according to any of the preceding claims,
wherein the image generation model (IGM) is a latent variable generative model, preferably a score-based generative model or a stable diffusion model.

8. Method according to any of the preceding claims,
wherein the image (I) comprising the at least one feature (F) is an environmental image captured by an environmental sensor, especially a camera.

9. Method according to any of the preceding claims,
wherein the at least one feature (F) is a face of a person or a facial element of a person, a license plate on an object, or an object, in particular an identifiable structure, a building or an area to be anonymized or if the at least one feature (F) is an obscured, especially blurred or pixelated, image portion.

10. Method according to any of the preceding claims,
wherein at least one of the feature detection model (OD), the instance segmentation model (IS), and the image generation model (IGM) is/are tuned by applying a reinforcement learning procedure (R).

11. Method according to claim 10,
wherein a reward function (r) used for the reinforcement learning procedure (R) is defined based on a performance of a function implemented by using a machine learning model, which is trained using multiple replacement images (RF).

12. Method according to claim 11,
wherein the machine learning model is an object detector or a semantic segmentation model.

13. Use of the Method according to any of the preceding claims for training of a function implemented by using a machine learning model, in particular for training of a machine learning model used to implement an ADAS function.

14. Computer program comprising instructions, which, when the program is executed by a computer, cause the computer to carry out the method of any of the claims 1-12.

15. Computer-readable (storage) medium comprising instructions executable by at least one processor to perform the method of any of the claims 1-12 or on which the computer program according to claim 14 is stored.
